# EUROPÄISCHE PATENTSCHRIFT

(11) **EP 1 097 445 B1**
(45) Veröffentlichungstag und Bekanntmachung des Hinweises auf die Patenterteilung: **16.10.2002**
(21) Anmeldenummer: 99936529.9
(22) Anmeldetag: 13.07.1999
(51) Int. Cl.: G10K 15/04, B60Q 5/00

(54) **VERFAHREN UND VORRICHTUNG ZUM ERZEUGEN VON DEM BETRIEB EINES VERBRENNUNGSMOTORS ENTSPRECHENDEN GERÄUSCHEN IM INNENRAUM EINES KRAFTFAHRZEUGS**
METHOD AND DEVICE FOR PRODUCING SOUNDS CORRESPONDING TO THE OPERATION OF AN INTERNAL COMBUSTION ENGINE IN THE INNER SPACE OF A MOTOR VEHICLE
PROCEDE ET DISPOSITIF PERMETTANT DE PRODUIRE DES SONS CORRESPONDANT AU FONCTIONNEMENT D'UN MOTEUR A COMBUSTION INTERNE DANS L'HABITACLE D'UN VEHICULE A MOTEUR

(30) Priorität: 14.07.1998 DE 19831576
(43) Veröffentlichungstag der Anmeldung: 09.05.2001
(73) Patentinhaber: TÜV Automotive GmbH Unternehmensgruppe, TÜV Süddeutschland, 80339 München (DE); Bayerische Motoren Werke Aktiengesellschaft, 80809 München (DE)
(72) Erfinder: SCHICK, Bernhard, D-76199 Karlsruhe (DE); DORMEIER, Herbert, D-82110 Germering (DE); SPANNHEIMER, Helmut, D-85630 Neukeferloh (DE); LISCHO, Bernd, D-84405 Dorfen (DE); FREYMANN, Raymond, D-80935 München (DE)
(74) Vertreter: Barske, Heiko, Dr. rer. nat.
(86) Internationale Anmeldenummer: EP9904953
(87) Internationale Veröffentlichungsnummer: WO00004532

(56) Entgegenhaltungen:
- WO-A-90/13109
- WO-A-91/18385
- DE-A- 19 701 801
- US-A- 5 571 239

## Beschreibung

Die Erfindung betrifft ein Verfahren und eine Vorrichtung zum Erzeugen von vom Betrieb eines Verbrennungsmotors abhängigen Geräuschen im Innenraum eines Kraftfahrzeuges.

Immer weitergehende Grenzwerte für äußere Fahrzeuggeräusche, der zunehmende Komfortanspruch von Fahrzeuginsassen und der technische Fortschritt haben dazu geführt, daß in modernen Kraftfahrzeugen, insbesondere Personenkraftwagen, das Motorgeräusch oder sonstige akustische Hinweise auf Fahrzustände, wie Geschwindigkeit, Beschleunigung usw. kaum mehr hörbar sind. Das positive Ergebnis dieser Innengeräuschabsenkung hat den unerwünschten Nebeneffekt, daß bei den Fahrzeuginsassen, insbesondere der Fahrerin oder dem Fahrer das subjektive Gefühl für Geschwindigkeit und/oder Beschleunigung verfälscht wird. Diese mangelnde Gefühl kann zur Unterschätzung von Gefahrensituationen führen, was sicherheitsrelevant ist

Aus der WO 91/18385 ist eine Geräuschserzeugungsvorrichtung zur Beschallung des Innenraums eines Fahrzeugs mit einem Geräuschgenerator und einem diesem nachgeschalteten Lautsprecher bekannt. Der Geräuschgenerator ist als ein Mikroprozessor mit nachgeschaltetem Synthesizer ausgebildet und hat mehrere Eingänge, denen die Drehzahl der Brennkraftmaschine, die Last, unter der sie läuft, die Fahrzeuggeschwindigkeit, eine Lautstärke und die Fahrtdauer zugeführt werden. Das Lastsignal und das Drehzahlsignal können auf vielfältig unterschiedliche Weise gewonnen werden. Ein Beispiel, die Last zu erfassen, besteht in der Messung des Unterdrucks bei Vergaser und/oder Einspritzmotoren, wobei dieser Unterdruck stromabwärts einer Drosselklappe erfaßt wird. Damit aus solchen Unterdruckmessungen auf die Last geschlossen werden kann, unter der die Brennkraftmaschine läuft, ist entscheidend, daß das Lastsignal geglättet ist und dem mittleren Unterdruck entspricht, der stromabwärts der Drosselklappe herrscht. Andernfalls ist dieses Signal zur Laststeuerung nicht brauchbar. Entsprechend ist der Synthesizer vorgesehen, der aus den ihm vom Mikroprozessor zugeführten Signalen ein Geräusch erzeugt, das für den Fahrer eine entspannende Atmosphäre erzeugen soll. Eine präzise Information über den Lastzustand, mit dem der Motor läuft, oder über den Fahrzustand des Fahrzeugs ist weder möglich, noch beabsichtigt. Vielmehr soll eine für den Fahrer angenehme Klangatmosphäre erzielt werden. Die bekannte Geräuscherzeugungsvorrichtung ist in ihrem Aufbau verhältnismäßig kompliziert und aufwendig.

Der Erfindung liegt die Aufgabe zugrunde, in einfacher Weise das eingangs geschilderte Problem zu lösen, auch bei sehr komfortablen, hervorragend geräuschgedämpften Fahrzeugen der Fahrerin oder dem Fahrer ein realistisches subjektives Gefühl für augenblickliche Fahrzustände zu vermitteln.

Das Verfahren gemäß dem Anspruch 1 liefert eine Lösung der Erfindungsaufgabe.

Der Anspruch 2 ist auf eine Vorrichtung zur Lösung der Erfindungsaufgabe gerichtet.

Die erfindungsgemäße Vorrichtung wird mit den Merkmalen der Ansprüche 3 bis 12 in vorteilhafter Weise weitergebildet.

Überraschenderweise hat sich herausgestellt, daß allein die Hörbarmachung von Druckschwankungen in der dem Motor zugeführten Frischluftströmung bzw. Frischladungsströmung eine akustische Information vermittelt, die die Fahrerin oder den Fahrer über Drehzahl, Last und Drehmoment informiert, d.h. über die Betriebszustände des Motors, die den Fahrzustand des Fahrzeugs bestimmen. Ein weiterer mit der Erfindung erzielter Vorteil liegt darin, daß sich auch mit dem erfindungsgemäßen Verfahren bzw. der erfindungsgemäßen Vorrichtung im Innenraum ein "Sound" erzeugen läßt, der als angenehm empfunden wird. Die Umsetzung von Druckschwankungen der Frischluftströmung in akustische Signale ist außerordentlich einfach und erfordert weder hochkomplizierte, mehrfache Sensoren, noch aufwendige Signalverarbeitungen oder Synthesizer.

Die Erfindung wird im folgenden anhand schematischer Zeichnungen beispielsweise und mit weiteren Einzelheiten erläutert.

Es stellen dar:
- Fig. 1: schematisch das Ansaugsystem eines vierzylindrigen Verbrennungsmotors,
- Fig. 2: den Ausschnitt II der Fig. 1,
- Fig. 3: den Ausschnitt III der Fig. 2,
- Fig. 4: ein Blockschaltbild der erfindungsgemäßen Vorrichtung und
- Fig. 5: ein Detail eines gegenüber Fig. 4 abgeänderten Blockschaltbildes.

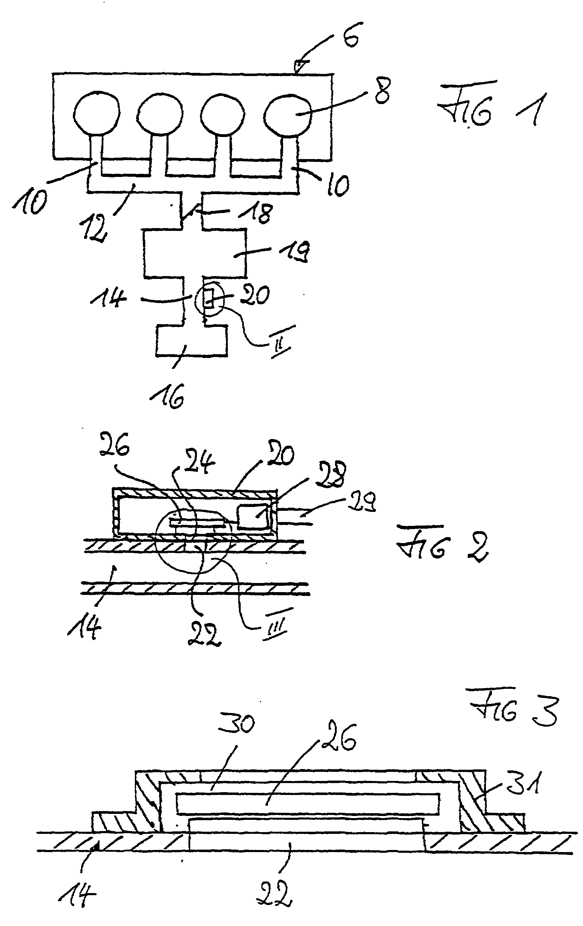

Gemäß Fig. 1 weist ein Verbrennungsmotor 6 vier Zylinder 8 auf, denen über Einzelsaugrohre 10 Frischluft bzw. Frischluftladung zugeführt wird. Die Einzelsaugrohre 10 sind über ein Verteilerrohr 12 miteinander verbunden, das über ein Sammelsaugrohr 14 an ein Luftfilter 16 angeschlossen ist. Zur Leistungssteuerung ist eine Drosselklappe 18 vorgesehen, die bei einem Dieselmotor fehlt und durch ein andersartiges Leistungsstellungsorgang ersetzt werden kann. Zwischen der Drosselklappe 18 und das Luftfilter 16 kann ein Luftsammler 19 angeordnet sein.

Vorteilhafterweise stromoberhalb der Drosselklappe 18 am Luftsammler 19 oder zwischen dem Luftsammler und dem Luftfilter 16 ist ein Drucksensor 20 angeordnet, der Druckschwankungen der den Zylindern 8 zugeführten Frischluftströmung bzw. Frischladung erfaßt.

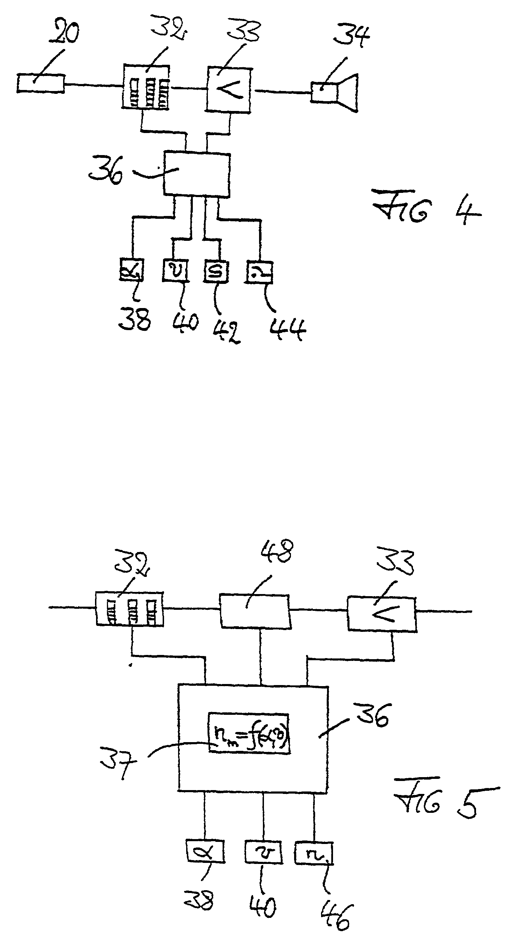

Fig. 2 zeigt einen vergrößerten Ausschnitt der Fig. 1.

Gemäß Fig. 2 weist das Sammelsaugrohr 14 in seiner Wand ein Loch 22 auf, mit dem ein druckempfindliches Eingangsfenster 24 des Drucksensors 20 fluchtet. Der Drucksensor 20 ist am Sammelsaugrohr 14 in an sich bekannter Weise beispielsweise durch Verschraubung, Verklebung usw. befestigt, wobei vorteilhafterweise das Eingangsfenster 24 unmittelbar an das Loch 22 grenzt. Im Inneren des Drucksensors 20 ist ein druckempfindliches Bauteil 26, beispielsweise ein Piezoelement, angeordnet, das über eine Elektronik 28 mit Ausgängen 29 verbunden ist.

Mit dem Drucksensor 20 sollen Druckschwankungen am Loch 22 erfaßt werden. Das druckempfindliche Bauteil 26 ist daher derart ausgebildet und angeordnet, daß es auf diese Druckschwankungen anspricht. Es kann als Absolutdrucksensor ausgebildet sein. Da der Absolutdruck im vorliegenden Fall nicht von wesentlicher Bedeutung ist, sondern es auf die Erfassung von Druckschwankungen ankommt, ist das Bauteil 26 vorteilhafterweise als Differenzdrucksensor ausgebildet, das den Unterschied zwischen dem Druck an seiner Vorderseite, d.h. den Druck im Loch 22, und dem Druck an seiner Hinterseite erfaßt, wobei der Druck an der Hinterseite vorteilhafterweise der Umgebungsluftdruck ist.

Weiterhin weist der Drucksensor 20 vorteilhafterweise einen weiten Frequenzbereich von beispielsweise 1 Hz bis 10 kHz auf und ist temperaturkompensiert. Ein solcher Drucksensor wird beispielsweise in Türen von Kraftfahrzeugen als Seitenaufprallchrashsensor benutzt und ist unter der Bezeichnung Siemens Pressure Satellit for Sidecrash Tests, EBM16, im Handel erhältlich.

Der Drucksensor 20 ist vorteilhafterweise hochdynamisch, wobei sein breiter Frequenzbereich dafür sorgt, daß steile Anstiegs- oder Abstiegsflanken der stochastischen Drucksignale einwandfrei erfaßt werden. Über die Anbindung übertragener Körperschall wird vom Drucksensor kaum erfaßt.

Fig. 3 zeigt ein Beispiel. Das druckempfindliche Bauteil 26 ist ein Piezoelement, das auf Änderungen des an seinen Stirnseiten wirksamen Druckunterschiedes mit Änderungen der elektrischen Spannung zwischen seinen Stirnseiten reagiert. Das plättchenförmige Bauteil 26 ist hermetisch dicht in einer elastomeren Umhüllung 30 aufgenommen, die an seiner dem Loch 22 zugewandten Stirnseite als dünne Membran ausgebildet ist, die Druckschwankungen praktisch keinen Widerstand entgegensetzt. Die Umhüllung 30 ist zusammen mit dem Bauteil 26 in einer Halterung 31 aufgenommen, die am Sammelsaugrohr 14 befestigt ist. Durch entsprechende Ausbildung der Umhüllung 30 sowie gegebenenfalls weitere zwischenangeordnete Teile ist eine Körperschallentkopplung zwischen dem der Saugrohrwand und dem Baulteil 26 zumindest in den interessierenden Frequenzbereichen gegeben. Desweiteren ist die Anbindung des Bauteils 26 an die Wand des Saugrohrs derart, daß es im Gegensatz zu der großflächigen Anregung durch Luftdruckschwankungen durch Körperschall kaum angeregt wird.

Es versteht sich, daß auch andere Anbindungen druckempfindlicher Bauteile oder die Verwendung anderer druckempfindlicher Bauteile, beispielsweise Membranen, druckempfindliche Widerstände usw. möglich ist. Wenn die Rückseite des Bauteils 30 der Fig. 3 über ihre gesamte Fläche an der dann geschlossen ausgebildeten Halterung anliegt, stellt das Bauteil 26 einen Absolutdrucksensor dar. Je nach Größe der rückseitigen Öffnung in der Halterung 31 und der Anbindung an den Umgebungsdruck und/oder den Saugrohrdruck lassen sich die Betriebscharakteristika beeinflussen.

Fig. 4 zeigt ein Blockschaltbild der Anordnung. Dem Sensor 20 ist eine Filtereinrichtung 32 nachgeschaltet, der wiederum ein Verstärker 33 nachgeschaltet ist, dessen Ausgang mit einem Lautsprecher 34 verbunden ist.

Der Frequenzgang der Filtereinrichtung 32 wird von einer Modulationseinrichtung 36 bestimmt, mit der auch der Verstärkungsfaktor des Verstärkers 33 verändert werden kann. Eingänge der Modulationseinrichtung 36 sind mit einem Sensor 38 zum Sensieren der Stellung eines Leistungsstellorgans, einem Sensor 40 zum Sensieren der Fahrzeuggeschwindigkeit, einem Sensor 42 zum Sensieren einer Schalthebelstellung und einem Schalter 44 verbunden. Der Aufbau der Filtereinrichtung 32, des Verstärkers 33 und der Modulationseinrichtung 36 sowie der Sensoren 38, 40 und 42 ist an sich bekannt und werden daher nicht erläutert.

Die Funktion der beschriebenen Vorrichtung ist folgende:

Die Ladungsströmung durch das Sammelsaugrohr 14 schwingt entsprechend der Anregung durch den Motor. Mittels des Drucksensors 20 werden Druckschwankungen der Strömung im Sammelsaugrohr 14 erfaßt und aufgrund der hohen Empfindlichkeit und Dynamik des Drucksensors in Ausgangssignale umgewandelt, die die Ansaugschwingungen bzw. Druckschwankungen wiedergeben. Diese Druckschwankungen enthalten unmittelbar Information über die Drehzahl und die Last, unter der der Motor läuft, wobei die Lastinformation insbesondere bei der Anordnung gemäß Fig. 1, in der der Drucksensor 20 stromoberhalb der Drosselklappe 20 sitzt, außerordentlich dynamisch ist. Das Ausgangssignal des Drucksensors 20 wird von der Filtereinrichtung 32 aufbereitet und im Verstärker 33 verstärkt und anschließend vom Lautsprecher 34 wiedergegeben.

Vorteilhafterweise werden von der Filtereinrichtung 32 Frequenzen über 300 Hz abgeschwächt, was zu einem angenehmen und nicht von störenden Überlagerungen getrübten Geräusch führt. Brummfrequenzen unterhalb 30 Hz oder 30 bis 40 Hz werden ebenfalls unterdrückt, um keine subjektiv unangenehmen Geräusche zu erzeugen. Eine solche Filtereinrichtung ist einfach und daher kostengünstig realisierbar.

Auch bei außerordentlich gut schallgedämpften Fahrzeuginnenräumen, in denen Windgeräusche, Abrollgeräusche usw. nicht mehr hörbar sind, läßt sich auf diese Weise ein dem Betrieb des Motors entsprechendes Geräusch erzeugen, das subjektiv unmittelbar als Motorgerausch empfunden wird und über den Fahrzustand des Fahrzeugs bzw. die Leistungsabgabe des Motors informiert und dem Fahrer eine realistische Einschätzung ermöglicht.

Der Frequenzgang der Filtereinrichtung 32 kann auf das jeweilige Fahrzeug abgestimmt werden.

Es kann zweckmäßig sein, den Frequenzgang der Filtereinrichtung 32 mittels der Modulationseinrichtung 36 von der Gaspedalstellung, der Fahrzeuggeschwindigkeit und/oder der Wählhebelstellung eines Getriebes abhängig zu machen. In ähnlicher Weise kann der Verstärkungsfaktor des Verstärkers 33 von diesen Einflußgrößen abhängen. Beispielsweise kann bei Stellung eines Wählhebels in einer Sportstellung das Frequenzspektrum leicht angehoben werden und der Verstärkungsfaktor zu größeren Geschwindigkeiten hin oder bei zunehmender Stellung des Leistungsstellorgans erhöht werden. Mittels des Schalters 44 lassen sich unterschiedliche Klangcharakteristika einstellen.

Für viele Anwendungsfälle ist es vorteilhaft, das über den Lautsprecher 34 abgestrahlte Motorgeräusch nicht nur durch Anheben und Absenken seiner Frequenzanteile zu beeinflussen, sondern aktiv zu verändern, indem beispielsweise durch Frequenzvervielfachung um den Faktor 1,5 und Formung der Frequenzanteile aus der Geräuschchrakteristik eines Vierzylindermotors die eines Sechszylindermotors erzeugt wird.

Fig. 5 stellt ein abgeändertes Detail des Blockschaltbildes dar:

Bei einem mit einem CVT-Getriebe (continuous variable transmission) ausgerüsteten Fahrzeug stellt sich ein für den Fahrer ungewohnter und bezüglich der Abschätzbarkeit der augenblicklichen Fahrgeschwindigkeit nachteiliger Effekt dadurch ein, daß die Motordrehzahl von der Fahrgeschwindigkeit weitgehend entkoppelt ist. Bei der Ausführungsform der Fig. 5 enthält die Modulationseinrichtung 36 einen Kennfeldspeicher 37, in dem ein Drehzahlkennfeld abgespeichert ist, in dem eine jeweilige Motordrehzahl entsprechend einem herkömmlichen, beispielsweise mit Stufenautomatgetriebe versehenen Antriebsstrang in Abhängigkeit von der Gaspedalstellung und der Fahrgeschwindigkeit abgespeichert ist. Die Ist-Drehzahl wird von einem Drehzahlsensor 46 erfaßt, sodaß ein jeweiliger Frequenzvervielfachungsfaktor errechnet werden kann, der einem aktiven Baustein 48 zugeführt wird. Auf diese Weise läßt sich das im Innenraum wahrnehmbare Motorgeräusch eines CVT-Fahrzeugs an das eines herkömmlichen Fahrzeugs anpassen.

Mit der Erfindung wird auf kostengünstige Weise (es können in Großserie verfügbare Bauteile eingesetzt werden) fahrerrelevante Informationen über den Motorbetrieb erhalten werden. Die Ansaugschwingung enthält Informationen über Drehzahl und Drehmoment, die insbesondere bei Erfassung stromoberhalb einer Drosselklappe hochdynamisch sind, da die Drosselklappe beispielsweise im Leerlauf oder bei rollendem bzw. schiebendem Fahrzeug die Dynamik im Verteilerrohr 12 glättet, so daß im Sammelsaugrohr 14 nur geringe Schwankungen vorhanden sind, die bei zunehmender Öffnung der Drosselklappe stark zunehmen.

Die geschilderte Vorrichtung kann in vielfältiger Weise abgeändert werden. Es können unterschiedlichste, hochdynamische Drucksensoren verwendet werden. Der Drucksensor kann unmittelbar innerhalb des Sammelsaugrohrs, am Luftsammler 19 oder sonstwo derart angeordnet werden, daß er Ansaugdruckschwankungen erfaßt. Es ist auch möglich, den Drucksensor stromoberhalb des Luftfilters 16 anzuordnen. Die beschriebene Vorrichtung kann in die Audioanlage eines Kraftfahrzeugs integriert werden, wobei in modernen Radiogeräten bereits Verstärker enthalten sind, die den Verstärkungsfaktor selbsttätig an die Fahrzeuggeschwindigkeit anpassen.

## Patentansprüche

1. Verfahren zum Erzeugen von vom Betrieb eines Verbrennungsmotors abhängigen Geräuschen im Innenraum eines Kraftfahrzeugs,
**dadurch gekennzeichnet, daß**
durch das Ansaugen des oder der Zylinder des Motors angeregte Druckschwankungen in der dem Motor zugeführten Frischluftströmung erfaßt werden und in Signale umgesetzt werden, die über wenigstens einen, im Innenraum angeordneten Lautsprecher hörbar gemacht werden.

2. Vorrichtung zum Erzeugen von vom Betrieb eines Verbrennungsmotors abhängigen Geräuschen im Innenraum eines Kraftfahrzeugs,
**gekennzeichnet durch**
einen **durch** das Ansaugen des oder der Zylinder des Motors angeregte Druckschwankungen einer Frischluftströmung in den Motor (6) erfassenden Drucksensor (20),
eine Verstärkereinrichtung (32,33;32,48,33) zur Verstärkung der Ausgangssignale des Drucksensors und
wenigstens einen, an den Verstärker angeschlossenen, im Innenraum des Kraftfahrzeugs angeordneten Lautsprecher (34) zur Widergabe der verstärkten Ausgangssignale.

3. Vorrichtung nach Anspruch 2, **dadurch gekennzeichnet, daß** der Drucksensor (20) derart angeordnet ist, dass er die Frischluftströmung stromoberhalb eines in der Frischluftströmung angeordneten Laststellgliedes (18) des Verbrennungsmotors erfaßt.

4. Vorrichtung nach Anspruch 2 oder 3, **dadurch gekennzeichnet, daß** der Drucksensor (20) ein Differenzdrucksensor ist.

5. Vorrichtung nach einem der Ansprüche 2 bis 4, **dadurch gekennzeichnet, daß** der Drucksensor (30) ein für einen Frequenzbereich von 1 Hz bis 10 kHz empfindlicher Drucksensor ist.

6. Vorrichtung nach einem der Ansprüche 2 bis 5, **dadurch gekennzeichnet, daß** die Verstärkereinrichtung (32, 33; 32,48,33) eine Filtereinrichtung (32) zur frequenzselektiven Verarbeitung der Ausgangssignale des Drucksensors (20) enthält.

7. Vorrichtung nach Anspruch 6, **dadurch gekennzeichnet, daß** die Filtereinrichtung (32) Frequenzen über 300 Hz abschwächt.

8. Vorrichtung nach Anspruch 6 oder 7, **dadurch gekennzeichnet, daß** die Filtereinrichtung (32) Frequenzen unter 30 Hz abschwächt.

9. Vorrichtung nach einem der Ansprüche 2 bis 8, **dadurch gekennzeichnet, daß** eine Modulationseinrichtung (36) vorgesehen ist, mit der Eigenschaften der Verstärkereinrichtung (32,33; 32,48,33) veränderbar sind.

10. Vorrichtung nach Anspruch 9, **dadurch gekennzeichnet, daß** die Modulationseinrichtung (36) einen Baustein (37) zum Ansteuern eines aktiven Bausteins (48) in der Verstärkereinrichtung (32,48,33) enthält.

11. Vorrichtung nach einem der Ansprüche 2 bis 10, **dadurch gekennzeichnet, daß** der Drucksensor (20) bei einem mehrzylindrigem Verbrennungsmotor an einer Stelle angeordnet ist, an der er die allen Zylindern zugeführte Frischluftströmung erfaßt.

12. Vorrichtung nach einem der Ansprüche 2 bis 11, **dadurch gekennzeichnet, daß** ein Sammelsaugrohr (14) des Verbrennungsmotors (6) ein Loch (22) aufweist, und der Drucksensor (20) derart am Sammelsaugrohr angebracht ist, daß sich ein Eingangsfenster (24) des Drucksensors an das Loch anschließt.

## Claims

1. Method for producing sounds as a function of the operation of an internal combustion engine, in the interior of a motor vehicle, **characterized in that** pressure fluctuations, excited by the induction of the cylinder or cylinders of the engine, in the fresh air stream fed to the engine are sensed and converted into signals which are made audible by means of at least one loudspeaker arranged in the interior.

2. Device for producing sounds as a function of the operation of an internal combustion engine, in the interior of a motor vehicle, **characterized by**
a pressure sensor (20) which senses pressure fluctuations, excited by the induction of the cylinder or cylinders of the engine, of a fresh air stream into the engine (6),
an amplifier device (32, 33; 32, 48, 33) for amplifying the output signals of the pressure signal, and
at least one loudspeaker (34) connected to the amplifier and arranged in the interior of the motor vehicle, for playing back the amplified output signals.

3. Device according to Claim 2, **characterized in that** the pressure sensor (20) is arranged in such a way that it senses the fresh air stream upstream of a load actuating element (18), arranged in the fresh air stream, of the internal combustion engine.

4. Device according to Claim 2 or 3, **characterized in that** the pressure sensor (20) is a differential pressure sensor.

5. Device according to one of Claims 2 to 4, **characterized in that** the pressure sensor (30) is a pressure sensor which is sensitive to a frequency range of 1 Hz to 10 kHz.

6. Device according to one of Claims 2 to 5, **characterized in that** the amplifier device (32, 33; 32, 48, 33) contains a filter device (32) for frequency-selective processing of the output signals of the pressure sensor (20).

7. Device according to Claim 6, **characterized in that** the filter device (32) attenuates frequencies above 300 Hz.

8. Device according to Claim 6 or 7, **characterized in that** the filter device (32) attenuates frequencies below 30 Hz.

9. Device according to one of Claims 2 to 8, **characterized in that** a modulator (36) is provided with which properties of the amplifier devices (32, 33; 32, 48, 33) can be changed.

10. Device according to Claim 9, **characterized in that** the modulator (36) contains a module (37) for actuating an active module (48) in the amplifier device (32, 48, 33).

11. Device according to one of Claims 2 to 10, **characterized in that** in a multi-cylinder internal combustion engine the pressure sensor (20) is arranged at a location at which it senses the fresh air stream fed to all the cylinders.

12. Device according to one of Claims 2 to 11, **characterized in that** a collector (14) of the internal combustion engine (6) has a hole (22), and the pressure sensor (20) is mounted on the collector in such a way that an input window (24) of the pressure sensor adjoins the hole.

## Revendications

1. Procédé pour produire des bruits dans l'habitacle d'un véhicule, en dépendance du fonctionnement d'un moteur à combustion interne,
**caractérisé en ce que**
les variations de pression dans le courant d'air frais amené au moteur excitées par l'aspiration du ou des cylindres du moteur sont saisies et transformées en signaux qui sont rendus audibles via au moins un haut-parleur agencé dans l'habitacle.

2. Dispositif pour produire des bruits dans l'habitacle d'un véhicule, en dépendance du fonctionnement d'un moteur à combustion interne,
**caractérisé par**
un capteur de pression (20) saisissant les variations de pression dans le courant d'air frais amené au moteur, excitées par l'aspiration du ou des cylindres du moteur,
un amplificateur (32, 33 ; 32, 48, 33) pour amplifier les signaux de sortie du capteur de pression, et
au moins un haut-parleur (34) branché à l'amplificateur, agencé dans l'habitacle du véhicule et destiné reproduire les signaux de sortie amplifiés.

3. Dispositif selon la revendication 2, **caractérisé en ce que** le capteur de pression (20) est agencé de telle sorte qu'il saisit le courant d'air frais en amont d'un organe de réglage de charge (18) du moteur à combustion interne, agencé dans le courant d'air frais.

4. Dispositif selon l'une ou l'autre des revendications 2 et 3, **caractérisé en ce que** le capteur de pression (20) est un capteur de pression différentielle.

5. Dispositif selon l'une quelconque des revendications 2 à 4, **caractérisé en ce que** le capteur de pression (30) est un capteur de pression sensible pour une plage de fréquence de 1 Hz à 10 kHz.

6. Dispositif selon l'une quelconque des revendications 2 à 5, **caractérisé en ce que** l'amplificateur (32, 33 ; 32, 48, 33) contient un filtre (32) servant à traiter de manière sélective en fréquence les signaux de sortie du capteur de pression (20).

7. Dispositif selon la revendication 6, **caractérisé en ce que** le filtre (32) affaiblit des fréquences supérieures à 300 Hz.

8. Dispositif selon l'une ou l'autre des revendications 6 et 7, **caractérisé en ce que** le filtre (32) affaiblit des fréquences inférieures à 30 Hz.

9. Dispositif selon l'une quelconque des revendications 2 à 8, **caractérisé en ce qu'**il est prévu un dispositif de modulation (36) avec lequel on peut faire varier les propriétés de l'amplificateur (32, 33 ; 32, 48, 33).

10. Dispositif selon la revendication 9, le dispositif de modulation (36) contient un composant (37) pour piloter un composant actif (48) dans l'amplificateur (32, 48, 33).

11. Dispositif selon l'une quelconque des revendications 2 à 10, **caractérisé en ce que** dans un moteur à combustion interne à plusieurs cylindres, le capteur de pression (20) est agencé à un emplacement auquel il saisit le courant d'air frais amené à tous les cylindres.

12. Dispositif selon l'une quelconque des revendications 2 à 11, **caractérisé en ce qu'**un collecteur d'admission (14) du moteur à combustion interne (6) présente un trou (22), et **en ce que** le capteur de pression (20) est monté sur le collecteur d'admission de telle sorte qu'une fenêtre d'entrée (24) du capteur de pression se raccorde au trou.
